(19) Europäisches Patentamt / European Patent Office / Office européen des brevets

(11) **EP 4 571 659 A1**

(12) **EUROPEAN PATENT APPLICATION**
published in accordance with Art. 153(4) EPC

(43) Date of publication:
**18.06.2025 Bulletin 2025/25**

(21) Application number: **23851889.8**

(22) Date of filing: **09.08.2023**

(51) International Patent Classification (IPC):
**G06T 17/00** *(2006.01)* **G06V 10/75** *(2022.01)*

(86) International application number:
**PCT/CN2023/112047**

(87) International publication number:
**WO 2024/032668 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 CN 202210956344**

(71) Applicant: **Shining 3D Tech Co., Ltd.**
**Hangzhou, Zhejiang 311258 (CN)**

(72) Inventors:
• **CHEN, Han**
**Hangzhou, Zhejiang 311258 (CN)**

• **ZHAO, Xiaobo**
**Hangzhou, Zhejiang 311258 (CN)**
• **ZHANG, Jian**
**Hangzhou, Zhejiang 311258 (CN)**
• **HUANG, Leijie**
**Hangzhou, Zhejiang 311258 (CN)**
• **MA, Chao**
**Hangzhou, Zhejiang 311258 (CN)**

(74) Representative: **Dehns Germany Partnerschaft mbB**
**Theresienstraße 6-8**
**80333 München (DE)**

(54) **THREE-DIMENSIONAL RECONSTRUCTION METHOD, APPARATUS AND SYSTEM**

(57) Disclosed are a method, apparatus and system for three-dimensional reconstruction. The method includes: obtaining a first image and a second image, where the first image and the second image are obtained by collecting a symbol image projected onto a surface of a measured object with different image collection devices respectively, the symbol image includes a plurality of target symbols randomly distributed in a preset direction, and the target symbols are line segment stripes; obtaining a first target pixel point of each symbol in the first image, determining second target pixel points matched with the first target pixel points one by one in the second image so as to complete matching, and conducting, in a case that the first target pixel point in the first image does not complete matching, secondary matching on the first target pixel point that does not complete matching; and determining three-dimensional coordinates of the first target pixel point at least according to pre-determined pixel coordinates of the first target pixel point in the first image and pixel coordinates of the second target pixel point in the second image, so as to complete three-dimensional reconstruction.

Obtain a first image and a second image, where the first image and the second image are obtained by collecting a symbol image projected onto a surface of a measured object with different image collection devices respectively, the symbol image includes a plurality of target symbols randomly distributed in a preset direction, and the target symbols are line segment stripes — S202

Obtain a first target pixel point of each symbol in the first image, determine second target pixel points matched with the first target pixel points one by one in the second image so as to complete matching, and conduct, in a case that the first target pixel point in the first image does not complete matching, secondary matching on the first target pixel point that does not complete matching — S204

three-dimensional coordinates of the first target pixel point at least according to pre-determined pixel coordinates of the first target pixel point in the first image and pixel coordinates of the second target pixel point in the second image, so as to complete three-dimensional reconstruction — S206

Fig. 2

## Description

### Cross-Reference to Related Application

The disclosure claims the priority to Chinese Patent Application No. 202210956344.4, filed with the Chinese Patent Office on August 10, 2022 and entitled "Method, apparatus and system for three-dimensional reconstruction", which is incorporated in its entirety herein by reference.

### Technical Field

The disclosure relates to the field of three-dimensional reconstruction, and particularly relates to a method, apparatus and system for three-dimensional reconstruction.

### Background

A three-dimensional reconstruction technology based on structured light is a kind of three-dimensional reconstruction technology that projects an optical coding pattern onto a surface of a measured object and recovers three-dimensional data of the surface of the object by means of a collected deformation pattern. The three-dimensional reconstruction technology based on structured light is characterized by high efficiency and anti-interference performance, and it has been widely used in a wide range of three-dimensional reconstruction scenes. Matching of homologous pixel points is a core issue of the three-dimensional reconstruction technology based on structured light. Different matching strategies depend on different coding methods. According to different coding methods of projected patterns, the structured light technology can be divided into time coding and space coding. For time coding, multiple patterns need to be chronologically projected onto the measured scenarios, and the measured object and the projector are generally required to be static relative to each other. Thus, scanning at a high frame rate is unachievable, and the applicable scenes are limited to some extent, and it is mostly used for static scanning scenes. For space coding, generally only one pattern needs to be projected onto the measured scene to complete three-dimensional reconstruction. In a coding method of circular symbols in the related art, a relative displacement relation of neighborhood symbols is used for decoding. Another method is to obtain three-dimensional data through matching of image blocks. In the former method, coding capacity of symbols is small, and only sparse symbol points can be reconstructed, with fewer data in a single frame and lower scanning efficiency. The latter method is lower in accuracy though matching of image blocks.

No effective solution has been put forward yet at present to solve the problems.

## Summary

Embodiments of the disclosure provide a method, apparatus and system for three-dimensional reconstruction, so as to at least solve a technical problem of low accuracy of a three-dimensional reconstruction result due to incomplete matching in a process of symbol matching.

A first aspect of the embodiments of the disclosure provides a method for three-dimensional reconstruction. The method includes: obtaining a first image and a second image, where the first image and the second image are obtained by collecting a symbol image projected onto a surface of a measured object with different image collection devices respectively, the symbol image includes a plurality of target symbols randomly distributed in a preset direction, and the target symbols are line segment stripes; obtaining a first target pixel point of each symbol in the first image, determining second target pixel points matched with the first target pixel points one by one in the second image so as to complete matching, and conducting, in a case that the first target pixel point in the first image does not complete matching, secondary matching on the first target pixel point that does not complete matching; and determining three-dimensional coordinates of the first target pixel point at least according to pre-determined pixel coordinates of the first target pixel point in the first image and pixel coordinates of the second target pixel point in the second image, so as to complete three-dimensional reconstruction.

In some embodiments of the disclosure, the conducting secondary matching on the first target pixel point that does not complete matching includes: determining the first target pixel point that completes matching in a first preset peripheral area zone of the first target pixel point that does not complete matching; determining light planes corresponding to the first target pixel points of all the symbols in a second preset peripheral area zone of the first target pixel point that completes matching as first light plane sequences, where the first target pixel point includes: midpoints of the line segment stripes and feature points of the line segment stripes; determining three-dimensional coordinates of the first target pixel point that does not complete matching in all the light planes in the first light plane sequences as candidate three-dimensional coordinates; and determining pixel points corresponding to all the candidate three-dimensional coordinates in the second image as candidate pixel points, and determining the second target pixel point matched with the first target pixel point that does not complete matching from the candidate pixel points.

In some embodiments of the disclosure, the determining the second target pixel point matched with the first target pixel point that does not complete matching from the candidate pixel points includes: determining the second target pixel point having a minimum distance from each of the candidate pixel points in the second image, and determining a distance between each of the candidate pixel points and the second target pixel point having the minimum distance as a first distance; and determining the candidate pixel point having a minimum first distance as a third target pixel point, and determining the second target pixel point having a minimum distance from the third target pixel point as the second target pixel point matched with the second target pixel point that does not complete matching.

In some embodiments of the disclosure, the method further includes: determining three-dimensional coordinates of the first target pixel point that completes matching; substituting the three-dimensional coordinates of the first target pixel point that completes matching into light plane equations corresponding to all the symbols in the first image, so as to obtain residual parameters; and determining the light plane corresponding to the light plane equation having a minimum residual parameter as the light plane corresponding to the first target pixel point that completes matching.

In some embodiments of the disclosure, a length of the target symbols in the first image is determined through a method as follows: determining, in a case that the plurality of target symbols are randomly distributed in a horizontal axis direction of the symbol image, a first magnification and a second magnification; multiplying a ratio of the second magnification to the first magnification by a minimum value of a length of the target symbols, and determining a result as a minimum value of the length of the target symbols in the first image; and determining a preset proportional value of a width of the first image as a maximum value of the length of the target symbols in the first image.

In some embodiments of the disclosure, the pre-determined symbol image includes the plurality of target symbols randomly distributed in the preset direction. The target symbols are the line segment stripes. The method includes:

determining target zones where the target symbols are located based on a length of the target symbols, a width of the target symbols, a distance between the target symbols, and pixel coordinates of a central pixel point of the target symbols, where the pixel coordinates of the central pixel point of the target symbols are randomly generated in a zone where the symbol image is located; traversing all pixel points in the target zones, and generating, in a case that the target symbols do not exist in the target zones, the target symbols in the target zones, where the target symbol at least includes a line segment having a preset length and two end points corresponding to the line segment having the preset length; and generating the target symbols in all the target zones in a zone of the symbol image.

In some embodiments of the disclosure, the method further includes: determining a first neighborhood symbol set of any one of the symbols in the first image and a plurality of second neighborhood symbol sets of a plurality of candidate symbols in the second image; determining a number of neighborhood symbols, matched with neighborhood symbols in the first neighborhood symbol set, in the plurality of second neighborhood symbol sets, and determining the second neighborhood symbol set having a maximum number of matched neighborhood symbols in the plurality of second neighborhood symbol sets as a target second neighborhood symbol set; and determining the candidate symbol corresponding to the target second neighborhood symbol set as a symbol matched with any one of the symbols.

In some embodiments of the disclosure, the method further includes: determining target zones where the target symbols are located according to coordinates of the central pixel point of the target symbols, a length of the target symbols, and a width of the target symbols. Only one of the target symbols exists in the target zone.

Another aspect of the embodiments of the disclosure further provides an apparatus for three-dimensional reconstruction. The apparatus includes: an obtainment module configured to obtain a first image and a second image, where the first image and the second image are obtained by collecting a symbol image projected onto a surface of a measured object with different image collection devices respectively, the symbol image includes a plurality of target symbols randomly distributed in a preset direction, and the target symbols are line segment stripes; a matching module configured to obtain a first target pixel point of each symbol in the first image, determine second target pixel points matched with the first target pixel points one by one in the second image so as to complete matching, and conduct, in a case that the first target pixel point in the first image does not complete matching, secondary matching on the first target pixel point that does not complete matching; and a reconstruction module configured to determine three-dimensional coordinates of the first target pixel point at least according to pre-determined pixel coordinates of the first target pixel point in the first image and pixel coordinates of the second target pixel point in the second image, so as to complete three-dimensional reconstruction.

Yet another aspect of the embodiments of the disclosure further provides a system for three-dimensional reconstruction. The system is applied to a method for three-dimensional reconstruction. The system includes: at least two image collection devices, a projection device, and a first processor. The projection device is configured to project a pre-determined symbol image onto a surface of a measured object. The at least two image collection devices are configured to collect the pre-determined symbol image from the surface of the measured object so as to obtain a first image and a second image. The first processor is configured to obtain a first target pixel point of each symbol in the first image, determine second target pixel points matched with the first target pixel points one by one in the second image so as to complete matching, and conduct, in a case that the first target pixel point in the first image does not complete matching, secondary matching on the first target pixel point that does not complete matching; and is further configured to determine three-dimensional coordinates of the first target pixel point at least according to pre-determined pixel coordinates of the first target pixel point in the first image and pixel coordinates of the second target pixel point in the second image, so as to complete three-dimensional reconstruction.

Yet another aspect of the embodiments of the disclosure further provides a non-transitory storage medium. The non-transitory storage medium includes a stored program. The program controls, at runtime, a device where the non-transitory storage medium is located to execute the method for three-dimensional reconstruction.

Still another aspect of the embodiments of the disclosure further provides an electronic device. The electronic device includes: a memory and a processor. The processor is configured to run a program. The program executes, at runtime, the method for three-dimensional reconstruction.

In the embodiments of the disclosure, the first image and the second image are obtained, the first image and the second image are obtained by collecting the symbol image projected onto the surface of the measured object with different image collection devices respectively, the symbol image includes the plurality of target symbols randomly distributed in the preset direction, and the target symbols are the line segment stripes; the first target pixel point of each symbol in the first image is obtained, the second target pixel points matched with the first target pixel points are determined one by one in the second image so as to complete matching, and in the case that the first target pixel point in the first image does not complete matching, the secondary matching is conducted on the first target pixel point that does not complete matching; and the three-dimensional coordinates of the first target pixel point are determined at least according to the pre-determined pixel coordinates of the first target pixel point in the first image and the pixel coordinates of the second target pixel point in the second image, so as to complete three-dimensional reconstruction. In this way, through the secondary matching of the first target pixel point that does not complete matching, matching of all the first target pixel points is completed. Thus, a technical effect of complete matching of the first target pixel points in the first image is achieved, and further a technical problem of low accuracy of a three-dimensional reconstruction result due to incomplete matching in a process of symbol matching is solved.

**Brief Description of the Drawings**

The accompanying drawings, used to provide further understanding of the disclosure, constitute part of the disclosure, and illustrative embodiments of the disclosure and their description serve to explain the disclosure and are not to be construed as unduly limiting the disclosure. In the drawings:

Fig. 1 shows a block diagram of a hardware structure of a computer terminal (or a mobile device) of a method for three-dimensional reconstruction according to an embodiment of the disclosure;

Fig. 2 shows a schematic diagram of a method for three-dimensional reconstruction according to the disclosure;

Fig. 3a shows a schematic diagram of an optional symbol image according to an embodiment of the disclosure;

Fig. 3b shows a schematic diagram of another optional symbol image according to an embodiment of the disclosure;

Fig. 4 shows a schematic diagram of five optional symbol shapes according to an embodiment of the disclosure;

Fig. 5 shows a schematic diagram of optional line segment stripes according to an embodiment of the disclosure;

Fig. 6 shows an optional system for three-dimensional reconstruction according to an embodiment of the disclosure; and

Fig. 7 shows an optional apparatus for three-dimensional reconstruction according to an embodiment of the disclosure.

The above figures include the following reference numerals:
601, measured object; 602, first processor; 603, image collection device; 604, projection device; and 201, first line segment stripe.

**Detailed Description of the Embodiments**

In order to make those skilled in the art better understand a solution of the disclosure, a technical solution of embodiments of the disclosure will be described clearly and completely below in conjunction with accompanying drawings of the embodiments of the disclosure. Obviously, the examples described are merely some examples rather than all embodiments of the disclosure. Based on the embodiments of the disclosure, all other examples obtained by those of ordinary skill in the art without making creative efforts should fall within the protection scope of the disclosure.

It should be noted that the terms such as "first" and "second" in the description and claims of the disclosure and in the drawings are used to distinguish between similar objects and not necessarily to describe a particular order or sequential order. It should be understood that data used in this way may be interchanged where appropriate, such that the embodiments of the disclosure described herein may be implemented in other sequences than those illustrated or described herein. Moreover, the terms "include", "comprise" and "have" as well as their any variations are intended to cover non-exclusive inclusion, for instance, a process, a method, a system, a product or a device including a series of steps or units does not need to be limited by those explicitly listed, but may include other steps or units not explicitly listed or inherent to these processes, methods, products or devices.

An embodiment of the disclosure further provides an example of a method for three-dimensional reconstruction. It should be noted that steps illustrated in flow diagrams of the accompanying drawings may be executed in a computer system such as a set of computer-executable instructions, and although a logical order is illustrated in the flow diagrams, in some cases, the steps shown or described may be executed in an order different from that herein.

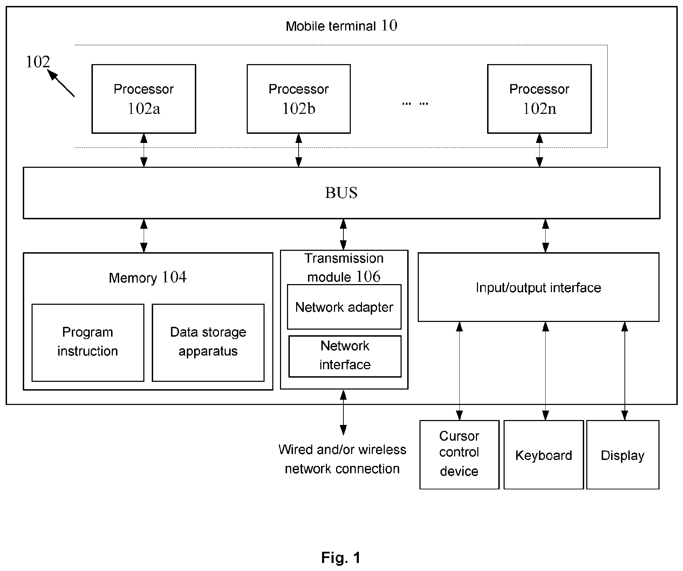

The method examples provided by the embodiments of the disclosure may be executed in a mobile terminal, a computer terminal, a cloud server, or a similar computation apparatus. Fig. 1 shows a block diagram of a hardware structure of a computer terminal (or a mobile device) for implementing a method for three-dimensional reconstruction. As shown in Fig. 1, the mobile terminal 10 (the mobile device 10) may include one or more (shown as 102a, 102b, ..., 102n in the figure) processors 102 (the processor 102 may include, but is not limited to, a processing apparatus such as a microcontroller unit (MCU) or a field programmable gate array (FPGA)), a memory 104 configured to store data, and a transmission module 106 for a communication function. In addition, the mobile terminal may further include: a display, an input/output interface (I/O interface), a universal serial bus (USB) port (which may be included as one of ports of the I/O interface), a network interface, a power supply, and/or a camera. Those of ordinary skill in the art may understand that a structure shown in Fig. 1 is merely illustrative and does not limit a structure of the electronic apparatus. For instance, the computer terminal 10 may further include more or fewer components than those shown in Fig. 1, or have a different configuration from that shown in Fig. 1.

It should be noted that the one or more processors 102 and/or other data processing circuits described above may generally be referred to as "data processing circuits" herein. The data processing circuit may be fully or partially embodied as software, hardware, firmware, or any other combination. In addition, the data processing circuit may be a single independent processing module, or be fully or partially incorporated into any one of other elements in the computer terminal 10 (or the mobile device). As involved in the embodiment of the disclosure, the data processing circuit serves as a processor control (such as selection of a variable resistance terminal path connected to the interface).

The memory 104 may be configured to store software programs and modules of application software, and for instance, program instructions/data storage apparatuses corresponding to the method for three-dimensional reconstruction in the embodiment of the disclosure. The processor 102 executes various functional applications and data processing by running the software programs and modules stored in the memory 104, that is, the method for three-dimensional reconstruction of an application is implemented. The memory 104 may include a high-speed random access memory, and may further include a non-transitory memory, and for instance, one or more magnetic storage apparatuses, flash memories, or other non-transitory solid-state memories. In some instances, the memory 104 may further include a memory remotely provided with respect to the processor 102, and the remote memories may be connected to the computer terminal 10 by means of a network. Instances of the network include, but are not limited to, the Internet, an enterprise intranet, a local area network, a mobile communication network, and their combination.

The transmission module 106 is configured to receive or transmit data by means of a network. Specific instances of the network may include a wireless network provided by a communication provider of the computer terminal 10. In one instance, the transmission module 106 includes one network interface controller (NIC) that may be connected to other network devices by means of a base station so as to be in communication with the Internet. In one instance, the transmission module 106 may be a radio frequency (RF) module that is configured to be in wireless communication with the Internet.

The display may be, for instance, a liquid crystal display (LCD) of a touch screen type. The liquid crystal display enables a user to interact with a user interface of the computer terminal 10 (or the mobile device).

An embodiment of the disclosure provides an example of a method for three-dimensional reconstruction. It should be noted that steps illustrated in flow diagrams of the accompanying drawings may be executed in a computer system such as a set of computer-executable instructions, and although a logical order is illustrated in the flow diagrams, in some cases, the steps shown or described may be executed in an order different from that herein.

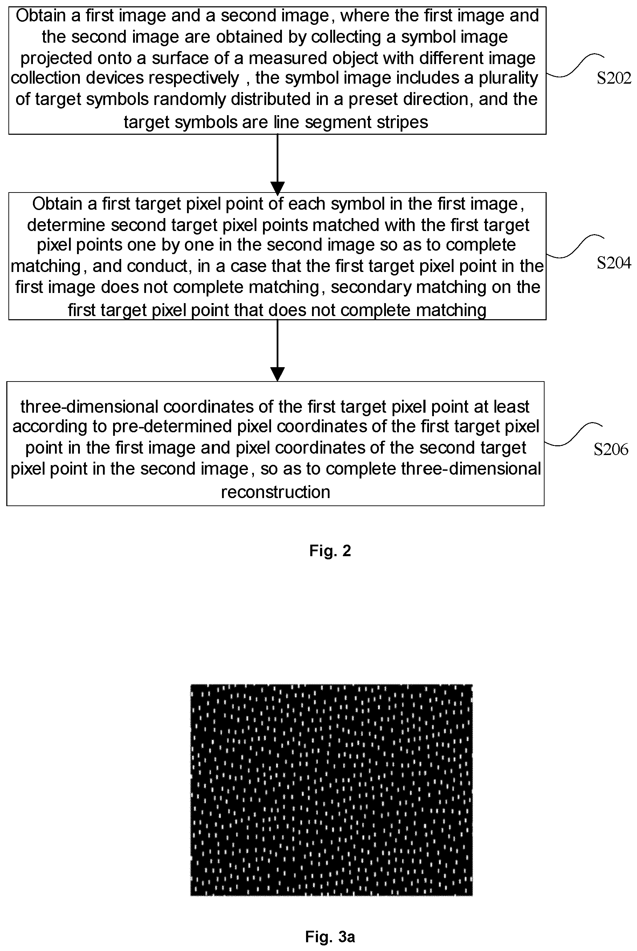

Fig. 2 is a flow diagram of a method for three-dimensional reconstruction according to an embodiment of the disclosure. As shown in Fig. 2, the method includes the following steps:

S202, a first image and a second image are obtained. The first image and the second image are obtained by collecting a symbol image projected onto a surface of a measured object with different image collection devices respectively. The symbol image includes a plurality of target symbols randomly distributed in a preset direction. The target symbols are line segment stripes.

S204, a first target pixel point of each symbol in the first image is obtained, second target pixel points matched with the first target pixel points are determined one by one in the second image so as to complete matching, and in a case that the first target pixel point in the first image does not complete matching , secondary matching is conducted on the first target pixel point that does not complete matching.

S206, three-dimensional coordinates of the first target pixel point are determined at least according to pre-determined pixel coordinates of the first target pixel point in the first image and pixel coordinates of the second target pixel point in the second image, so as to complete three-dimensional reconstruction.

With the steps, through the secondary matching of the first target pixel points that do not complete matching, matching of all the first target pixel points is completed. Thus, a technical effect of complete matching of the first target pixel points in the first image is achieved, and further a technical problem of low accuracy of a three-dimensional reconstruction result due to incomplete matching in a process of symbol matching is solved.

It should be noted that three-dimensional reconstruction is to establish a mathematical model suitable for computer representation and processing of a three-dimensional object, and is not only a basis for processing, operating and analyzing properties of the object in a computer environment, but also a virtual reality technology of establishing and expressing an objective event in a computer. Time coding and space coding techniques of structured light may be generally used in a three-dimensional reconstruction technology. The space coding of structured light is difficult in that stable and reliable coding and decoding of each pixel point are conducted with gray information of a pixel space. One method in the related art is to code a specific pixel point through certain symbol information. Through a coding method of large and small circular symbols, each symbol is coded and decoded with epipolar constraints and a relative displacement relation between neighborhood symbols and symbols in an image, such that each symbol point is reconstructed. This method has disadvantages that coding capacity of the symbols is limited, and only sparse symbol points can be reconstructed, with fewer data in a single frame and lower scanning efficiency; and great influence is caused by surface texture of an object. Another method is to match homologous points through a correlation between pixel blocks in a form of random speckles. For instance, a pseudo-random speckle image is projected onto a surface of a measured object through a projection device, and an improved semi-global matching (SGM) algorithm is used to match image blocks, such that three-dimensional data of the surface of the measured object is obtained. This method has disadvantages that an image block space suitable for matching is large, precision and details of reconstructed data are poor, and it is difficult to reconstruct a complex object. In the related art, in a process of symbol matching, due to image noise, a matched image block size and for the depth discontinuity on the surface of the measured object, the depth difference between adjacent points is generally great, and stripe pattern modulation is serious. Thus, the first target pixel points of some symbols in the first image fail to find matched points correctly, resulting in loss of local data. A depth in a small zone on the surface of the object presents certain continuity, such that complementation of matched points may be conducted according to a depth continuity principle.

Meanwhile, in the method provided by the disclosure, a coding method for line segment stripe symbols is used, and a plurality of feature points in the line segment stripes are randomly distributed between the symbols, such that coding capacity is increased, a data volume of a single image is improved, and scanning efficiency is further improved. Meanwhile, because the method provided by the disclosure is line segment stripe distribution, a distribution density of the symbols is high, such that accuracy of the obtained reconstructed data is improved.

The method provided by the disclosure may be applied to an oral scanner, a face scanner, an industrial scanner, a professional scanner, and other scanners, and may implement three-dimensional reconstruction of teeth, faces, bodies, industrial products, industrial devices, cultural relics, artworks, artificial limbs, medical appliances, buildings, and other objects or scenes.

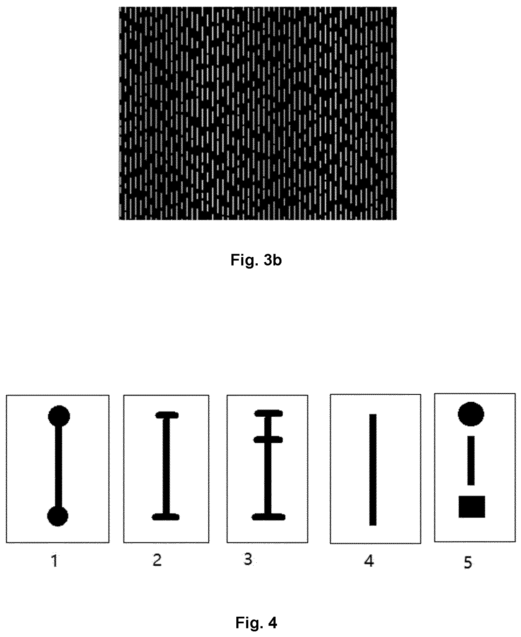

In S202, the first image is an image collected by a first image collection device, and the second image is an image collected by a second image collection device. The plurality of target symbols in the first image have a consistent orientation, and a distance between the symbols is randomly determined. For instance, a distance between a symbol 1 and a symbol 2 is 100 $\mu$m, and a distance between the symbol 2 and a symbol 3 is 80 $\mu$m. The symbols fluctuate randomly up and down in an image height direction. Features of the symbols include at least two extractable gray feature point patterns, and the feature points are distributed one above another at a preset distance. Positions of the stripes may be randomly distributed in both the image width direction and the image height direction, or may be randomly distributed only in either of the direction. Fig. 3a shows a symbol image randomly distributed in the image width direction and the image height direction. A stripe length is fixed in Fig. 3a. Fig. 3b shows a symbol image randomly distributed according to a stripe position in the image height direction. A stripe length is randomly set in Fig. 3b.

In S204, the first target pixel point of each symbol in the first image is obtained, the second target pixel points matched with the first target pixel points are determined one by one in the second image so as to complete matching. The steps may be understood as that the first image and the second image are obtained by collecting a projected image projected onto the surface of the measured object with different image collection devices, such that a symbol structure in the first image is consistent with that in the second image. In this way, with the first target pixel points as midpoints of the line segment stripes in the first image as an instance, matched pixel points in the second image are midpoints of the line segment stripes in the second image. There are many reasons for symbol mismatching, such as image noise and unclear images. Moreover, the method for three-dimensional reconstruction in the embodiment of the disclosure is suitable for secondary matching of a symbol feature point that does not complete matching in a matching method for a symbol feature point, and secondary matching of a target pixel point that does not complete matching in a matching method for a target pixel point.

In S206, the target symbols in the first image correspond to symbols in the second image one by one, and the first image is preset. That is, projection parameters of the symbols in the first image are preset. The three-dimensional coordinates of the symbols in the second image are determined according to a one-to-one correspondence between the target symbols and the symbols in the second image through a triangulation method.

S202 to S206 will be described in detail through specific examples.

In S204, secondary matching of the first target pixel point that does not complete matching, and complementation may be conducted through the depth continuity of the surface of the object in the small zone. In some embodiments, for a first target pixel point P that does not find a correct matched point in the first image, an estimated depth $D_s=f(D_i)$ of the first target pixel point P is obtained through interpolation with a reconstructed depth $\{D_i\}$ of the first target pixel point in its neighborhood, and $f(D_i)$ is a interpolation function into which $D_i$ is substituted. Then, according to the estimated depth $D_s$, a pixel position Q of an estimated matched point of P in the second image may be further computed. Finally, neighborhood pixels of a Q point in the second image are searched for a first target pixel point Q~ closest to the Q point, and the point Q~ is determined as a matched pixel point of the P point. Alternatively, secondary matching may be conducted through a consistency principle of a light plane order. In some embodiments, the first target pixel point that completes matching in a first preset peripheral area zone of the first target pixel point that does not complete matching is determined; light planes corresponding to the first target pixel points of all the symbols in a second preset peripheral area zone of the first target pixel point that completes matching are determined as first light plane sequences, where the first target pixel point includes: midpoints of the line segment stripes and feature points of the line segment stripes; three-dimensional coordinates of the first target pixel point that does not complete matching in all the light planes in the first light plane sequences are determined as candidate three-dimensional coordinates; and pixel points corresponding to all the candidate three-dimensional coordinates in the second image are determined as candidate pixel points, and the second target pixel point matched with the first target pixel point that does not complete matching are determined from the candidate pixel points.

Specifically, for any first target pixel point U that does not complete matching in the first image, a neighborhood (the first preset peripheral area zone) of the first target pixel point is searched for the first target pixel point that successfully completes matching, and a light plane sequence $\{N_k\}_{k \in V}$ of a neighborhood (the second preset peripheral area zone) of the first target pixel point that has been successfully matched is obtained. Then, according to calibrated light plane sequence information, complementation of a current neighborhood light plane sequence is conducted. A candidate light plane sequence $\{N_k\}_{k \in M}$ (the first light plane sequence) of the first target pixel point U is obtained. M is a sequence range of V after complementation.

Then, in a triangulation principle, three-dimensional coordinates of a central point may be computed from camera parameters, stripe center coordinates, and the light plane equations. Candidate light planes are traversed, and a three-dimensional coordinate value $\{(x,y,z)^T_k\}_{k \in M}$ of the U point in each of the light planes is computed. According to each of the three-dimensional coordinates, a plurality of candidate pixel points corresponding to the U point in the second image are determined, and a second target pixel point matched with the U point is determined from the plurality of candidate pixel points.

It should be noted that a process of projecting a striped structured light pattern onto the surface of the measured object through a projection module may be regarded as a process in which each stripe in the pattern generates a light plane in a space, and each of the light planes is intersected with the surface of the object, thus forming a deformed striped pattern on the surface of the object. Light plane information may be pre-calibrated, and each stripe may be represented by a light plane serial number and light plane parameters. Meanwhile, a light plane serial number of each stripe in the pattern and a light plane serial number of a neighborhood stripe may constitute a known sequence $\{N_i\}_{i \in V}$, where V denotes a light plane of the neighborhood stripe, and $N_i$ denotes the light plane serial number. For a first target pixel point whose three-dimensional coordinates $(\tilde{x},\tilde{y},\tilde{z})^T$ are obtained, its coordinates are substituted into any light plane equation $f(x,y,z)=ax+by+cz+d$, and a residual parameter $\Delta_i=a\tilde{x}+b\tilde{y}+c\tilde{z}+d$ may be computed. The residual parameter represents a distance from a point to the light plane. The smaller the residual error, the higher a possibility that the point belongs to the light plane. It may be understood that the three-dimensional coordinates of all the first target pixel points are substituted into a target light plane equation, and the first target pixel point having a minimum residual parameter is determined to belong to a target light plane.

In an alternative method, before the first light plane sequence is determined, three-dimensional coordinates of the first target pixel point that completes matching are determined; the three-dimensional coordinates of the first target pixel point that completes matching are substituted into light plane equations corresponding to all the symbols in the first image, so as to obtain residual parameters; and the light plane corresponding to the light plane equation having a minimum residual parameter is determined as the light plane corresponding to the first target pixel point that completes matching. In some embodiments, all the light planes are traversed to search for the light plane having the minimum residual error. The light plane is a light plane corresponding to the current first target pixel point, and a serial number of the light plane is recorded. The light plane serial numbers are sequentially marked for all reconstructed stripe center points.

In some embodiments of the disclosure, a method for determining the second target pixel point matched with the first target pixel point that does not complete matching from the candidate pixel points is provided. The method includes the following steps: the second target pixel point having a minimum distance from each of the candidate pixel points in the second image is determined, and a distance between each of the candidate pixel points and the second target pixel point having the minimum distance is determined as a first distance; and the candidate pixel point having a minimum first distance is determined as a third target pixel point, and the second target pixel point having a minimum distance from the third target pixel point is determined as the second target pixel point matched with the second target pixel point that does not complete matching.

In some embodiments, the second image is searched for the second target pixel point having the minimum distance from each of the candidate pixel points. With the second target pixel points as the midpoints of the line segment stripes in the second image as an instance, the second image is searched for a midpoint of the line segment stripe having a minimum distance from each of the candidate pixel points, and the first distance between each of the candidate pixel points and the midpoint of the line segment stripe having the minimum distance is computed. The second target pixel point having a minimum first distance is determined as a matched pixel point of the first target pixel point that does not complete matching.

After the second target pixel point that is the matched pixel point of the first target pixel point is determined, with the first target pixel points as the feature points, a first neighborhood symbol set of any one of the symbols in the first image and a plurality of second neighborhood symbol sets of a plurality of candidate symbols in the second image may be determined; a number of neighborhood symbols, matched with neighborhood symbols in the first neighborhood symbol set, in the plurality of second neighborhood symbol sets may be determined, and the second neighborhood symbol set having a maximum number of matched neighborhood symbols in the plurality of second neighborhood symbol sets may be determined as a target second neighborhood symbol set; and the candidate symbol corresponding to the target second neighborhood symbol set may be determined as the target symbol.

In some embodiments, the first neighborhood symbol set is a neighborhood symbol set of one symbol in the second image. For instance, with a symbol p in the second image as a line segment having a set length and two end points corresponding to the line segment as an instance, a neighborhood symbol set of the symbol p is $\{p^1, p^2, p^3, p^4\}$. The second neighborhood symbol set is a neighborhood symbol set of a candidate symbol of any symbol in the second image. For instance, a candidate symbol of the symbol p is a symbol q, and a neighborhood symbol set of the symbol q is $\{q^1, q^2, q^3, q^4\}$. In a case that three candidate symbols of the symbol p are provided, and for instance, $q_{i,i}=1,2,3$, three second neighborhood symbol sets $\{q_1^1, q_1^2, q_1^3, q_1^4\}$, $\{q_2^1, q_2^2, q_2^3, q_2^4\}$ and $\{q_3^1, q_3^2, q_3^3, q_3^4\}$ are provided. In a case that a plurality of symbols p are provided, the similar situation is caused, and will not be repeated herein.

It should be further explained that, with the symbol p as an instance, for each of the candidate symbols $q_i$ of the symbol p, i is a positive integer. Firstly, whether a symbol $p^1$ is matched with the first neighborhood symbol $q_1^1$ of the candidate symbol $q_1$ is determined. Then, all the candidate symbols of the symbol p are retrieved sequentially, and whether the neighborhood symbols of all the candidate symbols are matched with the symbol $p^1$ is determined. If there are a candidate symbol matched with the symbol $p^1$, 1 is added to a matching number. For instance, if the symbol $q_1^1$ is matched with the symbol $p^1$, a matching number of the candidate symbol $q_1$ is 1, and if the symbol $q_1^2$ is matched with a symbol $p^2$, 1 is added to a matching number of the candidate symbol $q_1$ so as to obtain a matching number 2. A candidate symbol having a maximum matching number is determined as the target symbol. With the symbol p as an instance, if a maximum number of matching between the candidate symbol $q_1$ and the symbol p is achieved, the candidate symbol $q_1$ is determined as the target symbol matched with the symbol p.

In some embodiments of the disclosure, a length of the line segment stripes corresponding to the target symbols in the first image is determined through a method as follows: in a case that the plurality of target symbols are randomly distributed in a horizontal axis direction of the symbol image, a first magnification and a second magnification are determined; a ratio of the second magnification to the first magnification is multiplied by a minimum value of a length of the target symbols, and a result is determined as a minimum value of the length of the target symbols in the first image; and a preset proportional value of a width of the first image is determined as a maximum value of the length of the target symbols in the first image.

In some embodiments, after a projection module and an image collection module of a reconstruction system are determined, a magnification $\varphi_p$ of a projection device and a magnification $\varphi_c$ of the image collection module are inherent parameters of the system. A relation between a unit pixel length $l_p$ of the symbol image and a unit pixel length $l_c$ of the first image is as follows:

$$l_c = \frac{\varphi_c}{\varphi_p} l_p$$

. A minimum length of a unit pixel of the symbol image that may be projected by the projection device is determined as $l_{min}$, such that a minimum length $L_{min}$ of stripes in the first image may be determined according to the formula. In order to ensure randomness of the projected pattern having a width W and a height H, a maximum length $L_{max}$ of stripes in the pattern does not exceed H/2, therefore the length of each of the stripes is $L_i \in [L_{min}, L_{max}]$.

Particularly, a stripe length L in the projected pattern may be a fixed length value or a random length value. If the stripe length is a random length value, a length of each of the stripes may be determined with a pseudo-random sequence $\{L_j\}$, and a value range of the pseudo-random sequence is $L_i \in [L_{min}, L_{max}]$.

In some embodiments of the disclosure, in order to determine the symbol image, target zones where the target symbols are located are determined based on a length of the target symbols, a width of the target symbols, a distance between the target symbols, and pixel coordinates of a central pixel point of the target symbols. The pixel coordinates of the central pixel point of the target symbols are randomly generated in a zone where the symbol image is located. All pixel points in the target zones are traversed, and in a case that the target symbols do not exist in the target zones, the target symbols are generated in the target zones. The target symbol at least includes a line segment having a preset length and two end points corresponding to the line segment having the preset length. The target symbols are generated in all the target zones in a zone of the symbol image. As shown in Fig. 4, five types of target symbols are shown. A symbol numbered 1 consists of a line segment and two circular end points corresponding to the line segment. A symbol numbered 2 consists of a line segment having a first preset length and two line segments having a second preset length as end points. The first preset length is greater than the second preset length. A symbol numbered 3 consists of a line segment having a first preset length and three line segments having a second preset length as end points. A symbol numbered 4 consists of a line segment and two end points of the line segment. A symbol numbered 5 is formed by intersecting a line segment with another line segment.

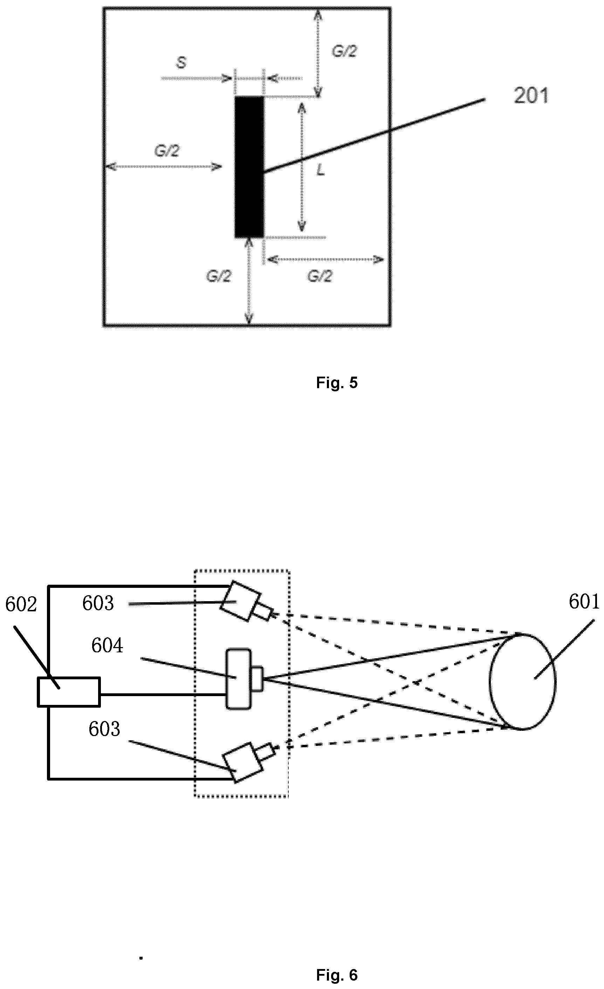

In a process of generating the symbol image, the target zones where the target symbols are located are determined according to coordinates of the central pixel point of the target symbols, a length of the target symbols, and a width of the target symbols. Only one of the target symbols exists in the target zone. Fig. 5 shows a schematic diagram of distribution of a first line segment stripe 201 in an image stain. If a stripe length is denoted by L, a stripe width is denoted by S, and a stripe distance is denoted by G/2, a size of a zone occupied by the first line segment stripe 201 in the image is (S+G)×(L+G). Only one stripe or no stripe may be included in a zone of an image stain. A coordinate position (u,v) is randomly generated as a center of a candidate image stain in a W×H image with to-be-filled stripes. Then, each pixel in a to-be-filled image corresponding to the stain is traversed, and whether the candidate image stain includes stripes is determined through retrieval. If no stripe is included, a stripe is generated at the center of the candidate image stain. Otherwise, no stripe is generated. Then, next random coordinates are generated, a color stain is searched for, and stripes are generated. The above processes are repeated until no more stripes may be generated in an entire to-be-filled image.

Based on the method, the disclosure can implement rapid and accurate reconstruction of three-dimensional data of the surface of the measured object. A reconstruction method for a central line of stripes in the disclosure can implement accurate obtainment of the three-dimensional data. A method with random stripes increases a number of coding points (any pixel point in a center of stripes is a coding point), improves data redundancy, and further improves scanning efficiency.

An embodiment of the disclosure further provides a system for three-dimensional reconstruction. As shown in Fig. 6, the system includes: at least two image collection devices 603, a projection device 604, and a first processor 602. The projection device 604 is configured to project a pre-determined symbol image onto a surface of a measured object 601. The at least two image collection devices 603 are configured to collect the pre-determined symbol image from the surface of the measured object 601 so as to obtain a first image and a second image. The first processor 602 is configured to obtain a first target pixel point of each symbol in the first image, determine second target pixel points matched with the first target pixel points one by one in the second image so as to complete matching, and conduct, in a case that the first target pixel point in the first image does not complete matching, secondary matching on the first target pixel point that does not complete matching; and is further configured to determine three-dimensional coordinates of the first target pixel point according to pre-determined image parameters of the first image and the second image, so as to complete three-dimensional reconstruction.

The image collection device 603 includes, but is not limited to, a gray camera and a color camera. A projection method of the projection device 604 includes, but is not limited to, digital light processing (DLP), mask projection (MASK), diffractive optical element (DOE) projection, and other projection methods, such that a structured light pattern may be projected. In an optional method, a plurality of image collection devices may be provided.

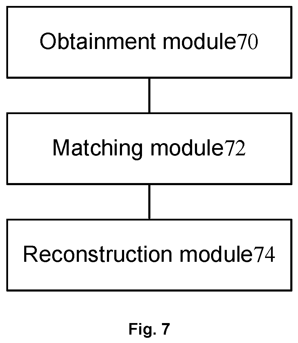

An embodiment of the disclosure further provides an apparatus for model training. As shown in Fig. 7, the apparatus includes: an obtainment module 70 configured to obtain a first image and a second image, where the first image and the second image are obtained by collecting a symbol image projected onto a surface of a measured object with different image collection devices respectively, the symbol image includes a plurality of target symbols randomly distributed in a preset direction, and the target symbols are line segment stripes; a matching module 72 configured to obtain a first target pixel point of each symbol in the first image, determine second target pixel points matched with the first target pixel points one by one in the second image so as to complete matching, and conduct, in a case that the first target pixel point does not complete matching in the first image, secondary matching on the first target pixel point that does not complete matching; and a reconstruction module 74 configured to determine three-dimensional coordinates of the first target pixel point according to predetermined image parameters of the first image and the second image, so as to complete three-dimensional reconstruction.

The matching module 72 includes: a first determination sub-module. The first determination sub-module is configured to determine the first target pixel point that completes matching in a first preset peripheral area zone of the first target pixel point that does not complete matching; determine light planes corresponding to the first target pixel points of all the symbols in a second preset peripheral area zone of the first target pixel point that completes matching as first light plane sequences, where the first target pixel point includes: midpoints of the line segment stripes and feature points of the line segment stripes; determine three-dimensional coordinates of the first target pixel point that does not complete matching in all the light planes in the first light plane sequences as candidate three-dimensional coordinates; and determine pixel points corresponding to all the candidate three-dimensional coordinates in the second image as candidate pixel points, and determine the second target pixel point matched with the first target pixel point that does not complete matching from the candidate pixel points.

The first determination sub-module includes: a first determination unit and a second determination unit. The first determination unit is configured to determine the second target pixel point having a minimum distance from each of the candidate pixel points in the second image, and determine a distance between each of the candidate pixel points and the second target pixel point having the minimum distance as a first distance; and determine the candidate pixel point having a minimum first distance as a third target pixel point, and determine the second target pixel point having a minimum distance from the third target pixel point as the second target pixel point matched with the second target pixel point that does not complete matching. The second determination unit is configured to determine three-dimensional coordinates of the first target pixel point that completes matching; substitute the three-dimensional coordinates of the first target pixel point that completes matching into light plane equations corresponding to all the symbols in the first image, so as to obtain residual parameters; and determine the light plane corresponding to the light plane equation having a minimum residual parameter as the light plane corresponding to the first target pixel point that completes matching.

The obtainment module 70 includes: a second determination sub-module. The second determination sub-module is configured to determine, in a case that the plurality of target symbols are randomly distributed in a horizontal axis direction of the symbol image, a first magnification and a second magnification; multiply a ratio of the second magnification to the first magnification by a minimum value of a length of the target symbols, and determine a result as a minimum value of the length of the target symbols in the first image; and determine a preset proportional value of a width of the first image as a maximum value of the length of the target symbols in the first image.

The second determination sub-module includes: a third determination unit. The third determination unit is configured to determine target zones where the target symbols are located according to coordinates of the central pixel point of the target symbols, a length of the target symbols, and a width of the target symbols. Only one of the target symbols exists in the target zone.

Another aspect of the embodiments of the disclosure further provides a non-transitory storage medium. The non-transitory storage medium includes a stored program. The program controls, at runtime, a device where the non-transitory storage medium is located to execute the method for three-dimensional reconstruction.

Yet another aspect of the embodiments of the disclosure further provides a processor. The processor is configured to run a program. The program executes, at runtime, the method for three-dimensional reconstruction.

The processor is configured to run the program that executes the following functions: a first image and a second image are obtained, where the first image and the second image are obtained by collecting a symbol image projected onto a surface of a measured object with different image collection devices respectively, the symbol image includes a plurality of target symbols randomly distributed in a preset direction, and the target symbols are line segment stripes; a first target pixel point of each symbol in the first image is obtained, second target pixel points matched with the first target pixel points are determined one by one in the second image so as to complete matching, and in a case that the first target pixel point in the first image does not complete matching, secondary matching is conducted on the first target pixel point that does not complete matching; and three-dimensional coordinates of the first target pixel points are determined according to pre-determined image parameters of the first image and the second image, so as to complete three-dimensional reconstruction.

The processor executes the method for three-dimensional reconstruction. Through the secondary matching of the first target pixel point that does not complete matching, matching of all the first target pixel points is completed. Thus, a technical effect of complete matching of the first target pixel points in the first image is achieved, and further a technical problem of low accuracy of a three-dimensional reconstruction result due to incomplete matching in a process of symbol matching is solved.

In some embodiments of the disclosure, each of the examples is described with their own emphasis. Reference may be made to related description of other examples for the part not detailed in a certain example.

In several embodiments provided by the disclosure, it should be understood that the disclosed technology may be implemented in other ways. The apparatus examples described above are merely illustrative. For instance, a division of the units may be a division of logical functions. In actual implementation, there may be additional ways of division. For instance, a plurality of units or components may be combined or integrated into another system, or some features may be ignored or not executed. Further, mutual coupling or direct coupling or communication connection shown or discussed may be indirect coupling or communication connection by means of some interfaces, units or modules, or may be in electrical or other forms.

The units illustrated as separate components may be physically separate or not, and the components shown as units may be physical units or not, that is, may be located in one place, or may also be distributed over a plurality of units. Some units or all the units may be selected according to actual needs, so as to achieve the objective of the solution of the example.

In addition, each functional unit in each embodiment of the disclosure may be integrated in one processing unit, or each unit may exist separately and physically, or two or more units may be integrated in one unit. The integrated unit may be implemented in a form of hardware, or may be implemented in a form of a software functional unit.

The integrated unit may be stored in a computer readable storage medium if implemented in the form of a software functional unit and sold or used as an independent product. Based on such understanding, the technical solution of the disclosure may be embodied in a form of software products in essence or in part that contributes to the prior art or in part or whole, the computer software products are stored in one storage medium, and include several instructions to make one computer device (which may be a personal computer, a server, a network device, etc.) execute all or some steps of the method of each of the embodiments of the disclosure. The storage medium includes: a USB flash disk, a read-only memory (ROM), a random access memory (RAM), a mobile hard disk, a magnetic disk, an optical disk and other media capable of storing program codes.

What are described above are merely preferred embodiments of the disclosure. It should be noted that those of ordinary skill in the art can also make some improvements and modifications without departing from the principle of the disclosure, and these improvements and modifications should also fall within the protection scope of the disclosure.

**Industrial Applicability**

A technical solution provided by embodiments of the disclosure is applied to the field of three-dimensional reconstruction. In the embodiments of the disclosure, a first image and a second image are obtained, the first image and the second image are obtained by collecting a symbol image projected onto a surface of a measured object with different image collection devices respectively, the symbol image includes a plurality of target symbols randomly distributed in a preset direction, and the target symbols are line segment stripes; a first target pixel point of each symbol in the first image is obtained, second target pixel points matched with the first target pixel points are determined one by one in the second image so as to complete matching, and in a case that the first target pixel point does not complete matching in the first image, secondary matching is conducted on the first target pixel point that does not complete matching; and three-dimensional coordinates of the first target pixel point are determined at least according to pre-determined pixel coordinates of the first target pixel point in the first image and pixel coordinates of the second target pixel point in the second image, so as to complete three-dimensional reconstruction. In this way, through the secondary matching of the first target pixel point that does not complete matching, matching of all the first target pixel points is completed. Thus, a technical effect of complete matching of the first target pixel points in the first image is achieved, and further a technical problem of low accuracy of a three-dimensional reconstruction result due to incomplete matching in a process of symbol matching is solved.

**Claims**

1. A method for three-dimensional reconstruction, comprising:

   obtaining a first image and a second image, wherein the first image and the second image are obtained by collecting a symbol image projected onto a surface of a measured object with different image collection devices respectively, the symbol image comprises a plurality of target symbols randomly distributed in a preset direction, and the target symbols are line segment stripes;

   obtaining a first target pixel point of each symbol in the first image, determining second target pixel points matched with the first target pixel points one by one in the second image so as to complete matching, and conducting, in a case that the first target pixel point in the first image does not complete matching, secondary matching on the first target pixel point that does not complete matching; and

   determining three-dimensional coordinates of the first target pixel point at least according to pre-determined pixel coordinates of the first target pixel point in the first image and pixel coordinates of the second target pixel point in the second image, so as to complete three-dimensional reconstruction.

2. The method as claimed in claim 1, wherein the conducting secondary matching on the first target pixel point that does not complete matching comprises:

   determining the first target pixel point that completes matching in a first preset peripheral area zone of the first target pixel point that does not complete matching;

   determining light planes corresponding to the first target pixel points of all the symbols in a second preset peripheral area zone of the first target pixel point that completes matching as first light plane sequences, wherein the first target pixel point comprises: midpoints of the line segment stripes and feature points of the line segment stripes;

   determining three-dimensional coordinates of the first target pixel point that does not complete matching in all the light planes in the first light plane sequences as candidate three-dimensional coordinates; and

   determining pixel points corresponding to all the candidate three-dimensional coordinates in the second image as candidate pixel points, and determining the second target pixel point matched with the first target pixel point that does not complete matching from the candidate pixel points.

3. The method as claimed in claim 2, wherein the determining the second target pixel point matched with the first target pixel point that does not complete matching from the candidate pixel points comprises:

   determining the second target pixel point having a minimum distance from each of the candidate pixel points in the second image, and determining a distance between each of the candidate pixel points and the second target pixel point having the minimum distance as a first distance; and

   determining the candidate pixel point having a minimum first distance as a third target pixel point, and determining the second target pixel point having a minimum distance from the third target pixel point as the second target pixel point matched with the second target pixel point that does not complete matching.

4. The method as claimed in claim 2, further comprising:

   determining three-dimensional coordinates of the first target pixel point that completes matching;

   substituting the three-dimensional coordinates of the first target pixel point that completes matching into light plane equations corresponding to all the symbols in the first image, so as to obtain residual parameters; and

   determining the light plane corresponding to the light plane equation having a minimum residual parameter as the light plane corresponding to the first target pixel point that completes matching.

5. The method as claimed in claim 1, wherein a length of the target symbols in the first image is determined through a method as follows:

   determining, in a case that the plurality of target symbols are randomly distributed in a horizontal axis direction of the symbol image, a first magnification and a second magnification;

   multiplying a ratio of the second magnification to the first magnification by a minimum value of a length of the target symbols, and determining a multiplying result as a minimum value of the length of the target symbols in the first image; and

   determining a preset proportional value of a width of the first image as a maximum value of the length of the target symbols in the first image.

6. The method as claimed in claim 1, wherein the pre-determined symbol image comprises the plurality of target symbols randomly distributed in the preset direction, the target symbols are the line segment stripes, and the method comprises;

determining target zones where the target symbols are located based on a length of the target symbols, a width of the target symbols, a distance between the target symbols, and pixel coordinates of a central pixel point of the target symbols, wherein the pixel coordinates of the central pixel point of the target symbols are randomly generated in a zone where the symbol image is located;

traversing all pixel points in the target zones, and generating, in a case that the target symbols do not exist in the target zones, the target symbols in the target zones, wherein the target symbol at least comprises a line segment having a preset length and two end points corresponding to the line segment having the preset length; and

generating the target symbols in all the target zones in a zone of the symbol image.

7. The method as claimed in claim 1, further comprising:

determining a first neighborhood symbol set of any one of the symbols in the first image and a plurality of second neighborhood symbol sets of a plurality of candidate symbols in the second image;

determining a number of neighborhood symbols, matched with neighborhood symbols in the first neighborhood symbol set, in the plurality of second neighborhood symbol sets, and determining the second neighborhood symbol set having a maximum number of matched neighborhood symbols in the plurality of second neighborhood symbol sets as a target second neighborhood symbol set; and

determining the candidate symbol corresponding to the target second neighborhood symbol set as a symbol matched with any one of the symbols.

8. The method as claimed in claim 1, further comprising:
determining target zones where the target symbols are located according to coordinates of the central pixel point of the target symbols, a length of the target symbols, and a width of the target symbols, wherein only one of the target symbols exists in the target zone.

9. An apparatus for three-dimensional reconstruction, comprising:

an obtainment module configured to obtain a first image and a second image, wherein the first image and the second image are obtained by collecting a symbol image projected onto a surface of a measured object with different image collection devices respectively, the symbol image comprises a plurality of target symbols randomly distributed in a preset direction, and the target symbols are line segment stripes;

a matching module configured to obtain a first target pixel point of each symbol in the first image, determine second target pixel points matched with the first target pixel points one by one in the second image so as to complete matching, and conduct, in a case that the first target pixel point in the first image does not complete matching, secondary matching on the first target pixel point that does not complete matching; and

a reconstruction module configured to determine three-dimensional coordinates of the first target pixel point at least according to pre-determined pixel coordinates of the first target pixel point in the first image and pixel coordinates of the second target pixel point in the second image, so as to complete three-dimensional reconstruction.

10. A system for three-dimensional reconstruction, comprising:

at least two image collection devices, a projection device, and a first processor, wherein the projection device is configured to project a pre-determined symbol image onto a surface of a measured object;

the at least two image collection devices are configured to collect the pre-determined symbol image from the surface of the measured object so as to obtain a first image and a second image; and

the first processor is configured to obtain a first target pixel point of each symbol in the first image, determine second target pixel points matched with the first target pixel points one by one in the second image so as to complete matching, and conduct, in a case that the first target pixel point in the first image does not complete matching, secondary matching on the first target pixel point that does not complete matching; and is further configured to determine three-dimensional coordinates of the first target pixel point at least according to pre-determined pixel coordinates of the first target pixel point in the first image and pixel coordinates of the second target pixel point in the second image, so as to complete three-dimensional reconstruction.

**11.** A non-transitory storage medium, comprising a stored program, wherein the program controls, at runtime, a device where the non-transitory storage medium is located to execute the method for three-dimensional reconstruction as claimed in any one of claims 1-8.

**12.** An electronic device, comprising: a memory and a processor, wherein the processor is configured to run a program, and the program executes, at runtime, the method for three-dimensional reconstruction as claimed in any one of claims 1-8.

Mobile terminal 10

102

| Processor 102a | Processor 102b | ... ... | Processor 102n |

BUS

**Memory 104**

| Program instruction | Data storage apparatus |

**Transmission module 106**

Network adapter

Network interface

Input/output interface

Wired and/or wireless network connection

| Cursor control device | Keyboard | Display |

**Fig. 1**

Obtain a first image and a second image, where the first image and the second image are obtained by collecting a symbol image projected onto a surface of a measured object with different image collection devices respectively , the symbol image includes a plurality of target symbols randomly distributed in a preset direction, and the target symbols are line segment stripes

S202

Obtain a first target pixel point of each symbol in the first image, determine second target pixel points matched with the first target pixel points one by one in the second image so as to complete matching, and conduct, in a case that the first target pixel point in the first image does not complete matching, secondary matching on the first target pixel point that does not complete matching

S204

three-dimensional coordinates of the first target pixel point at least according to pre-determined pixel coordinates of the first target pixel point in the first image and pixel coordinates of the second target pixel point in the second image, so as to complete three-dimensional reconstruction

S206

Fig. 2

Fig. 3a

**Fig. 3b**

1　　　　2　　　　3　　　　4　　　　5

**Fig. 4**

Fig. 5

Fig. 6

```
┌─────────────────────────────┐
│    Obtainment module70      │
└─────────────────────────────┘
              │
┌─────────────────────────────┐
│    Matching module72        │
└─────────────────────────────┘
              │
┌─────────────────────────────┐
│  Reconstruction module74    │
└─────────────────────────────┘
```

Fig. 7

## INTERNATIONAL SEARCH REPORT

| International application No. |
| --- |
| **PCT/CN2023/112047** |

### A. CLASSIFICATION OF SUBJECT MATTER

G06T17/00(2006.01)i;  G06V10/75(2022.01)i

According to International Patent Classification (IPC) or to both national classification and IPC

### B. FIELDS SEARCHED

Minimum documentation searched (classification system followed by classification symbols)

IPC： G06T G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 三维重建, 码元, 像素, 坐标, 匹配, 图像, 3D, three-dimension, reconstruction, pixel, coordinate, match, image

### C. DOCUMENTS CONSIDERED TO BE RELEVANT

| Category* | Citation of document, with indication, where appropriate, of the relevant passages | Relevant to claim No. |
| --- | --- | --- |
| PX | CN 115345993 A (SHINING 3D TECHNOLOGY CO., LTD.) 15 November 2022 (2022-11-15)<br>claims 1-12 | 1-12 |
| Y | CN 114820939 A (HANGZHOU HIKROBOT TECHNOLOGY CO., LTD.) 29 July 2022 (2022-07-29)<br>description, paragraphs [0032]-[0063], and figures 1, 2, and 6 | 1-12 |
| Y | CN 112270748 A (GUANGDONG OPPO MOBILE TELECOMMUNICATIONS CORP., LTD.) 26 January 2021 (2021-01-26)<br>description, paragraphs [0063]-[0073] | 1-12 |
| A | CN 108267097 A (HANGZHOU SHINING 3D TECHNOLOGY CO., LTD.) 10 July 2018 (2018-07-10)<br>entire document | 1-12 |
| A | US 2006167648 A1 (OHTANI, Hitoshi) 27 July 2006 (2006-07-27)<br>entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 October 2023** | **02 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112047**

| Patent document cited in search report | | | Publication date (day/month/year) | Patent family member(s) | | | Publication date (day/month/year) |
|---|---|---|---|---|---|---|---|
| CN | 115345993 | A | 15 November 2022 | None | | | |
| CN | 114820939 | A | 29 July 2022 | None | | | |
| CN | 112270748 | A | 26 January 2021 | None | | | |
| CN | 108267097 | A | 10 July 2018 | None | | | |
| US | 2006167648 | A1 | 27 July 2006 | WO | 2005017644 | A2 | 24 February 2005 |
| | | | | EP | 1655573 | A2 | 10 May 2006 |
| | | | | CN | 1701214 | A | 23 November 2005 |

Form PCT/ISA/210 (patent family annex) (July 2022)

**REFERENCES CITED IN THE DESCRIPTION**

**Patent documents cited in the description**

- CN 202210956344